# EUROPÄISCHE PATENTANMELDUNG

(11) **EP 1 491 377 A2**
(43) Veröffentlichungstag der Anmeldung: **29.12.2004**
(21) Anmeldenummer: 04014770.4
(22) Anmeldetag: 24.06.2004
(51) Int. Cl.: B60J 7/22

(54) **Fahrzeugdach mit Geräuschreduzierung**

(30) Priorität: 27.06.2003 DE 10329050
(71) Anmelder: Webasto AG, 82131 Stockdorf (DE)
(72) Erfinder: Bergmiller, Alexander, 86152 Augsburg (DE); Oerke, Philipp, 81479 München (DE)
(74) Vertreter: Bedenbecker, Markus

(57) **Zusammenfassung**

Fahrzeugdach mit einem Deckel (12), der mit seiner Hinterkante (14) aus einer eine Dachöffnung verschließenden Schließstellung nach oben ausstellbar ist, und mit Mitteln zur geräuschmindernden Beeinflussung einer Luftströmung in einem Lüftungsspalt (28), der sich beim Ausstellen des Deckels zwischen der Deckelhinterkante und einem hinteren Dachöffnungsrand (26) ergibt, dadurch gekennzeichnet, dass die Mittel zur Beeinflussung der Luftströmung an der Unterseite des Deckels (12) in einem Abstand von der Deckelhinterkante (14) und/oder an einer den hinteren Dachöffnungsrand (26) ausbildenden Wasserablaufeinrichtung (30) oder an einer zumindest bei ausgestelltem Deckel (12) den hinteren Dachöffnungsrand (26) untergreifenden Wasserablaufeinrichtung (30) angeordnet sind.

## Beschreibung

Die vorliegende Erfindung betrifft ein Fahrzeugdach nach dem Oberbegriff des Anspruchs 1.

Ein derartiges Fahrzeugdach, bei welchem Mittel zur geräuschmindernden Beeinflussung einer Luftströmung in einem Lüftungsspalt zwischen der Hinterkante eines ausgestellten Deckels und einem hinteren Dachöffnungsrand vorgesehen sind, ist beispielsweise aus der DE 40 16 791 C2 bekannt. Bei diesem bekannten Fahrzeugdach sind die Beeinflussungsmittel vorgesehen als im Bereich der Hinterkante des Deckels angeformter, nach unten abstehender, flächiger Ansatz, der sich bei angehobenem Deckel in den Lüftungsspalt hinein erstreckt und an seinem freien Ende mit Vorsprüngen versehen ist.

Ein Fahrzeugdach nach dem Oberbegriff des Anspruchs 1 ist ebenfalls aus der DE 101 13 540 A1 bekannt. Bei diesem bekannten Fahrzeugdach sind die Mittel zur Beeinflussung der Luftströmung durch den Lüftungsspalt hindurch ebenfalls an der Hinterkante eines Deckels angeordnet, und zwar in Form eines von der Deckelhinterkante zum Fahrzeuginnenraum hin nach unten abstehenden Flächenelements, in welchem eine Mehrzahl von Durchtrittsöffnungen ausgebildet sind.

Wenngleich bei den bekannten Fahrzeugdächern die bei ausgestelltem Zustand des Deckels auftretende Geräuschentwicklung reduziert werden kann, so hat es sich herausgestellt, dass die Anordnung der Mittel zur Beeinflussung der Luftströmung an der Hinterkante des Deckels in vielen Fällen nicht optimal für eine Geräuschreduzierung wirkt und darüber hinaus die konstruktive Gestaltungsfreiheit im Bereich der Deckelhinterkante eingeschränkt. Diese Einschränkung betrifft insbesondere die Gestaltung einer an der Deckelhinterkante üblicherweise vorgesehenen Randspaltdichtung zur Abdichtung des Spalts zwischen Deckelhinterkante und dahinter liegendem Dachöffnungsrand bei geschlossenem Fahrzeugdach.

Dementsprechend ist es eine Aufgabe der Erfindung, ein Fahrzeugdach der eingangs erwähnten Art so zu verbessern, dass eine bei ausgestelltem Deckel sich ergebende Geräuschentwicklung wirksam reduziert wird, wobei die Gestaltungsfreiheit im Bereich der Deckelhinterkante nicht beeinträchtigt ist.

Diese Aufgabe wird gelöst durch ein Fahrzeugdach nach Anspruch 1. Die abhängigen Ansprüche betreffen vorteilhafte Weiterbildungen der Erfindung.

Das erfindungsgemäße Fahreugdach ist dadurch gekennzeichnet, dass die Mittel zur Beeinflussung der Luftströmung an der Unterseite des Deckels in einem Abstand von der Deckelhinterkante angeordnet sind und/oder dass die Mittel zur Beeinflussung der Luftströmung an einer den hinteren Dachöffnungsrand ausbildenden Wasserablaufeinrichtung oder an einer zumindest bei ausgestelltem Deckel den hinteren Dachöffnungsrand untergreifenden Wasserablaufeinrichtung angeordnet sind.

Die Anordnung der Beeinflussungsmittel in einem Abstand von der Deckelhinterkante an der Deckelunterseite und/oder an einer Wasserablaufeinrichtung hat zur Folge, dass diese Mittel beim Ausstellen des Deckels und bei ausgestelltem Deckel im Vergleich zu den bekannten Konstruktionen etwas nach vorne und nach unten verlagert sind, so dass diese auch bei vergleichsweise wenig voluminöser Gestaltung der Beeinflussungsmittel tendenziell eher im Zentrum der Luftströmung bzw. Luftströmungsschwingung angeordnet sind. Darüber hinaus ist durch diese Beeinflussungsmittel die Konstruktion im Bereich der Deckelhinterkante, insbesondere z. B. die Konstruktion einer dort vorgesehenen Randspaltdichtung nicht beeinträchtigt. Die erfindungsgemäße Gestaltung bewirkt eine signifikante Reduzierung der Geräuschentwicklung nicht nur bei bereits voll ausgestelltem Deckel sondern insbesondere auch bereits zu Beginn und während des Ausstellvorganges.

In einer bevorzugten Ausführungsform ist vorgesehen, dass die Mittel zur Beeinflussung der Luftströmung eine bei ausgestelltem Deckel im Bereich des Lüftungsspalts angeordnete, in Fahrzeugquerrichtung sich erstreckende Materialleiste umfassen, die eine Strukturierung derart besitzt, dass der durch die Materialleiste hervorgerufene lokale Strömungswiderstand in Abhängigkeit von einer Position in Fahrzeugquerrichtung variiert. Diese Variation des Strömungswiderstands in Fahrzeugquerrichtung lässt sich in einfacher Weise durch eine korrugierte Formgebung (z. B. ein Beschnitt und/oder eine Lochung) der Materialleiste realisieren, die bevorzugt als flächiges Gebilde ausgebildet ist. Im Allgemeinen ergibt sich eine zufriedenstellende Geräuschreduzierung bei einer periodischen Variation des Strömungswiderstands entsprechend einer periodischen Variation der lokalen Materialleistengestaltung. Es soll jedoch nicht ausgeschlossen sein, dass in Optimierung der geräuschmindernden Wirkung eine nicht-periodische Variation in Fahrzeugquerrichtung verwendet wird.

Bevorzugt erfährt der durch die Materialleiste hervorgerufene lokale Strömungswiderstand in Fahrzeugquerrichtung betrachtet eine Variation mit mindestens zehn lokalen Minima.

Ebenfalls im Hinblick auf eine besonders wirksame Geräuschreduzierung ist es bevorzugt, wenn die Beeinflussungsmittel, z. B. die Materialleiste, sich wenigstens über einen Großteil der Dachöffnungsbreite in Fahrzeugquerrichtung, insbesondere die ganze Dachöffnungsbreite erstrecken.

Die Variation des Strömungswiderstands kann beispielsweise erreicht werden, wenn die Materialleiste eine Mehrzahl von in Fahrzeugquerrichtung voneinander beabstandet angeordneten Vorsprüngen und/oder Aussparungen aufweist. Beispiele hierfür sind etwa ein Zackenbeschnitt oder ein Wellenbeschnitt an einem in den Lüftungsspalt ragenden Rand der Materialleiste oder eine Lochung dieses Materialleistenrands.

Für die Geräuschreduzierung ist es auch vorteilhaft, wenn die an der Unterseite des Deckels in einem Abstand von der Deckelhinterkante angeordneten Mittel zur Beeinflussung der Luftströmung in Deckellängsrichtung betrachtet einen Abstand von der Deckelhinterkante besitzen, der mindestens 3% der Deckellängserstreckung und/oder mindestens 50% des minimalen Abstands zwischen Deckelhinterkante und hinterem Dachöffnungsrand bei ausgestelltem Deckel beträgt. insbesondere können die Beeinflussungsmittel an einer Stufe angeordnet sein, die in an sich bekannter Weise einen Übergangsbereich zwischen der Deckelhinterkante und einem davon in Deckellängsrichtung beabstandeten Deckelverstärkungsbereich bildet. In letzterem Deckelbereich befindet sich in der Regel ein an der Unterseite einer Deckelplatte angeordneter Verstärkungsaufbau, etwa ein Verstärkungsblech zur mechanischen Versteifung des Deckels. Ein solches Deckelverstärkungsblech kann hierbei rahmenartig an der Unterseite des Deckels verlaufen. An dem hinten befindlichen Abschnitt einer solchen Deckelverstärkung (Verstärkungssicke) kann z. B. die oben erwähnte Materialleiste ausgebildet oder angeordnet sein, insbesondere als Kunststoffformteil bzw. Kunststoffprofilteil formschlüssig daran gehalten oder angeformt. In einer Ausführungsform ist vorgesehen, dass an einer nach hinten gerichteten Randfläche der Deckelverstärkung nach hinten abstehende Materialrippen ausgebildet oder angeordnet sind, mit welchen die oben erwähnte Variation des Luftwiderstands im Lüftungsspalt realisiert ist. Solche Rippen können bei vollumschäumten Deckeln ein Bestandteil der Umschäumung sein bzw. bei teilumschäumten Deckeln durch ein oder mehrere zusätzliche Bauteile dargestellt werden.

In einer weiteren Ausführungsform ist vorgesehen, dass eine den hinteren Dachöffnungsrand ausbildende Wasserablaufeinrichtung wenigstens teilweise von einer in Fahrzeugquerrichtung verlaufenden Dichtung gebildet ist, welche in Schließstellung des Deckels diesen Deckel zum hinteren Dachöffnungsrand hin abdichtet und welche einen in den Lüftungsspalt ragenden Dichtungsabschnitt als Mittel zur Beeinflussung der Luftströmung aufweist. In diesem Fall erfüllt die Dichtung vorteilhaft eine Doppelfunktion, nämlich einerseits zum Abdichten im Schließzustand des Deckels und andererseits zur Bereitstellung der Beeinflussungsmittel durch einen Abschnitt der Dichtung. Zur Optimierung der Geräuschreduzierung ist es im Allgemeinen bevorzugt, diesen Dichtungsabschnitt in Fahrzeuglängsrichtung betrachtet weiter vorne als denjenigen Dichtungsabschnitt auszubilden, welcher in der Schließstellung zum Deckel hin abdichtet. Der als Beeinflussungsmittel dienende Dichtungsabschnitt kann z. B. als eine oben bereits beschriebene Materialleiste strukturiert sein.

In einer anderen Ausführungsform ist vorgesehen, dass eine den hinteren Dachöffnungsrand untergreifende Wasserablaufeinrichtung von einer in Fahrzeugquerrichtung verlaufenden Wasserrinne gebildet ist, die an deren Vorderseite die Mittel zur Beeinflussung der Luftströmung aufweist. Auch durch diese Maßnahme ergibt sich vorteilhaft eine Doppelfunktion eines oftmals ohnehin vorhandenen Bauteils, nämlich der in Fahrzeugquerrichtung unter dem Dachöffnungsrand verlaufenden Wasserrinne, von welcher ein in den Lüftungsspalt ragender Abschnitt die oben erwähnte Materialleiste unmittelbar ausbilden kann. Alternativ kann an einem solchen Wasserrinnenabschnitt z. B. eine die Materialleiste darstellende Profilleiste aufgesteckt oder angeformt werden. In einer Weiterbildung ist vorgesehen, dass die Wasserrinne höhenverstellbar vorgesehen ist und bei ausgestelltem Deckel angehoben ist und beim Absenken des Deckels in die Schließstellung zusammen mit dem Deckel abgesenkt wird. Eine solche Höhenverstellbarkeit der Wasserrinne ist an sich bekannt, beispielsweise aus der DE 34 42 599 A1. Wie ebenfalls aus dieser Veröffentlichung bereits bekannt, kann auch im Rahmen der Erfindung vorgesehen sein, dass das Fahrzeugdach als Schiebehebedach ausgebildet ist, bei welchem der Deckel nach dessen Absenkung zusammen mit der Wasserrinne nach hinten unter die feste Dachfläche verschiebbar ist. Die Höhenverstellung bzw. Verkippung der Wasserrinne führt im Rahmen der Erfindung zu dem Vorteil, dass die mit den Mitteln zur Beeinflussung der Luftströmung versehene Wasserrinne "automatisch" (beim Ausstellen des Deckels) in Richtung des Luftströmungszentrums gerückt wird.

Anstatt die eigentliche Wasserrinne beim Ausstellen des Deckels zu verstellen ist es auch bekannt (DE 38 24 942 C1), über einer fahrzeugseitig fest angeordneten, in Fahrzeugquerrichtung verlaufenden Wasserrinne eine zusätzliche Spritzwand anzuordnen, die zum Auffangen von Wasser bei ausgestelltem Deckel nach oben zum Lüftungsspalt hin verkippt ist. Auch ein in den Lüftungsspalt ragender Abschnitt einer solchen Spritzwand lässt sich im Rahmen der Erfindung vorteilhaft zur Anordnung der Beeinflussungsmittel nutzen.

Die Erfindung wird nachfolgend anhand einiger Ausführungsbeispiele mit Bezug auf die beigefügten Zeichnungen weiter beschrieben. Es stellen dar:
- Fig. 1: eine Vertikalschnittansicht eines Fahrzeugdaches im Übergangsbereich zwischen einem nach oben ausgestellten Deckel und einem hinteren Dachöffnungsrand,
- Fig. 2: eine Draufsicht eines Abschnitts einer geräuschmindernden Materialleiste zur Verwendung bei dem Fahrzeugdach nach Fig. 1,
- Fig. 3: eine Draufsicht eines Abschnitts einer geräuschmindernden Materialleiste zur Verwendung bei dem Fahrzeugdach nach Fig. 1 gemäß einer weiteren Ausführungsform,
- Fig. 4: eine Draufsicht eines Abschnitts einer geräuschmindernden Materialleiste zur Verwendung bei dem Fahrzeugdach nach Fig. 1 gemäß einer weiteren Ausführungsform,
- Fig.5: eine Vertikalschnittansicht ähnlich der Fig. 1 eines weiteren Fahrzeugdaches,
- Fig. 6: eine Vertikalschnittansicht ähnlich der Fig. 1 eines weiteren Fahrzeugdaches,
- Fig. 7: eine Vertikalschnittansicht eines Deckels im Bereich einer hinteren Deckelverstärkung, und
- Fig. 8: eine Horizontalschnittansicht des in Fig. 7 dargestellten Verstärkungsbereichs (Schnittebene VIII-VIII in Fig. 7).

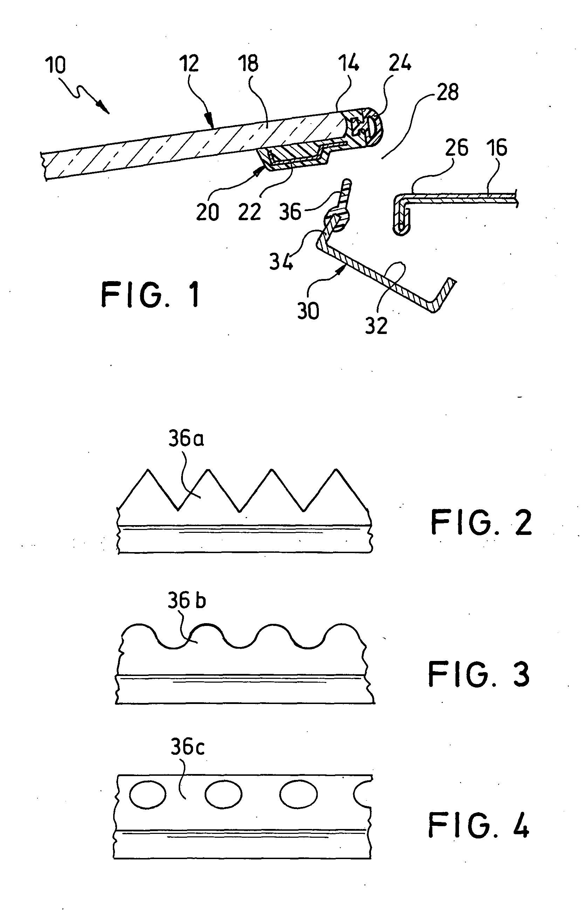

Fig. 1 zeigt ein Fahrzeugdach 10 mit einem Deckel 12 (hier: Glasdeckel), der mit seiner Hinterkante 14 aus einer eine Dachöffnung verschließenden Schließstellung nach oben ausgestellt ist. Diese Deckelstellung wird unabhängig von der konkreten Bauart des Dachöffnungssystems üblicherweise als Lüftungsstellung bezeichnet. Bei dem dargestellten Ausführungsbeispiel handelt es sich um ein Schiebehebedach, bei welchem ausgehend von der Schließstellung der Deckel 12 auch insgesamt nach unten abgesenkt und nach hinten (in Fig. 1 nach rechts) unter einen festen Dachäbschnitt 16 verschoben werden kann, um die Dachöffnung teilweise (vorne) oder ganz freizugeben.

Der Deckel 12 weist eine Glasplatte 18 mit einer rahmenartig umlaufenden Verstärkung auf, von welcher in Fig. 1 ein hinterer, als Kunststoffumschäumung ausgebildeter Verstärkungsabschnitt 20 zu sehen ist. In an sich bekannter Weise ist in dem Verstärkungsabschnitt 20 ein Deckelverstärkungsblech 22 aus Metall eingeschäumt und ist an der Deckelhinterkante 14 ein Holkammerdichtungsprofil 24 formschlüssig gehalten, welches in der Schließstellung den Deckel 12 gegen den zugeordneten hinteren Dachöffnungsrand 26 hin abdichtet.

Um bei der dargestellten Lüftungsstellung ein Eindringen von Wasser über den sich bei ausgestelltem Deckel zwischen der Deckelhinterkante 14 und dem hinteren Dachöffnungsrand 26 sich ergebenden Lüftungsspalt 28 zu verhindern, ist im dargestellten Beispiel eine den hinteren Dachöffnungsrand 26 untergreifende Wasserablaufeinrichtung 30 in Form einer in Fahrzeugquerrichtung verlaufenden, im Querschnitt etwa U-förmigen Wasserrinne 32 vorgesehen. Diese Wasserrinne 32 dient dazu, gegebenenfalls über den Lüftungsspalt 28 eingedrungenes Wasser in bekannter Weise in Fahrzeugquerrichtung abzuführen. Nach vorne hin wird die Wasserrinne von einem Profilschenkel 34 begrenzt. Bei dem dargestellten Ausführungsbeispiel ist vorgesehen, dass die Wasserablaufeinrichtung 30 höhenverstellbar ist und beim Ausstellen des Deckels 12 mit ihrem Profilschenkel 34 nach oben verkippt wird.

Eine Besonderheit des dargestellten Fahrzeugdaches 10 besteht darin, dass der Profilschenkel 34, der die im Luftdurchzug stehende Vorderkante der Wasserrinne 32 ausbildet, mit einer aufgesteckten Profilleiste 36 aus Kunststoff versehen ist, die sich aufgrund der Verkippung bei ausgestelltem Deckel 12 im Bereich des Lüftungsspalts 28 befindet, und eine Strukturierung derart besitzt, dass der durch diese Profilleiste 36 hervorgerufene lokale Strömungswiderstand in Ahängigkeit von einer Position in Fahrzeugquerrichtung variiert. Beispiele einer solchen geräuschmindernden Strukturierung der nach oben abstehenden Profilleiste 36 sind in den Figuren 2 bis 4 dargestellt.

Abweichend vom dargestellten Ausführungsbeispiel kann eine geräuschmindernde Strukturierung auch unmittelbar für die Vorderkante der Wasserrinne 32 vorgesehen sein, so dass vorteilhaft ohnehin (zur Wasserabfuhr) eingesetztes Material gleichzeitig zur Ausbildung der Geräuschminderungsmittel genutzt wird.

Bei der nachfolgenden Beschreibung von weiteren Ausführungsbeispielen werden für analoge Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Fig. 2 zeigt eine Profilleiste 36a, deren freier Rand mit einem Zackenbeschnitt ausgebildet ist, so dass der durch die Profilleiste 36a hervorgerufene lokale Strömungswiderstand in Fahrzeugquerrichtung betrachtet jeweils an einem Zackengrund minimal ist, wohingegen im Bereich der Zackenspitzen dieser Strömungswiderstand maximal ist.

Fig. 3 zeigt eine Profilleiste 36b mit einem Wellenbeschnitt, der in analoger Weise für eine geräuschmindernde Variation des Strömungswiderstands wirkt.

Fig. 4 zeigt eine Profilleiste 36c mit Aussparungen in Form einer Reihe von Durchgangsöffnungen, mit welchen ebenfalls eine Variation der lokalen Strömungseigenschaften realisiert wird.

Die in den Fig. 2 bis 4 dargestellten Ausführungen sind lediglich beispielhaft zu verstehen und wurden im Hinblick auf deren konstruktive Einfachheit gewählt. Die dargestellten Ausführungen können im Rahmen der Erfindung selbstverständlich modifiziert und/oder kombiniert werden. Wenngleich bei den dargestellten Ausführungen eine periodische Strukturvariation vorgesehen ist, so kann in einer Weiterbildung vorgesehen sein, dass die Variation nicht-periodisch ist, wobei eine solche nicht-periodische Struktur für ein bestimmtes Fahrzeugdach im Rahmen einer Optimierung (minimale Geräuschentwicklung) empirisch aufgefunden und gewählt werden kann.

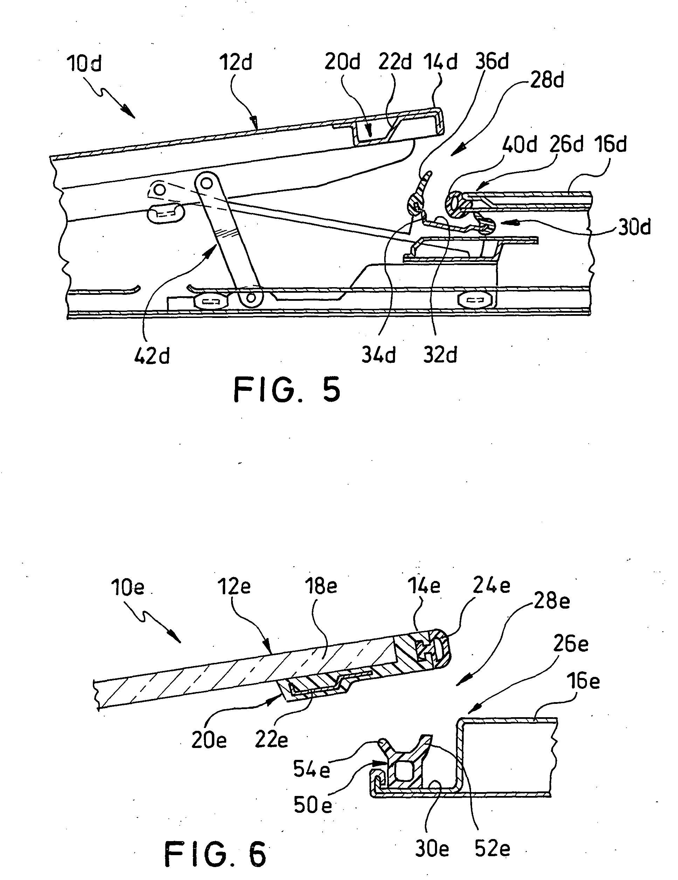

Fig. 5 zeigt ein weiteres Fahrzeugdach 10d mit einem Deckel 12d in Lüftungsstellung. Im Unterschied zu der mit Bezug auf Fig. 1 beschriebenen Dachausführung erfolgt die Abdichtung des Randspalts zwischen Deckelhinterkante 14d und hinterem Dachöffnungsrand 26d durch eine am hinteren Dachöffnungsrand aufgesteckte Holkammerprofildichtung 40, welche in Schließstellung unmittelbar an einem umfalzten Rand des Metalldeckels 12d anliegt. Dieser umfalzte Bereich des Deckels 12d bildet dessen Hinterkante 14d sowie den Verstärkungsabschnitt 20d aus. Eine Kippeinrichtung 42d bewerkstelligt die bereits mit Bezug auf Fig. 1 beschriebene Verkippung einer Wasserrinne 32d beim Ausstellen des Deckels 12d und eine Verschiebung der gesamten Wasserablaufeinrichtung 30d unter den festen Dachabschnitt 16d bei der zur Öffnung des Daches vorgesehenen Verschiebung des Deckels 12d nach hinten unter den festen Dachabschnitt 16d.

Eine an einem vorderen Profilschenkel 34d der Wasserrinne 32d aufgesteckte Materialleiste 36d besitzt bei dieser Ausführungsform eine doppelte Funktion. Zum einen, da der freie Rand dieser Materialleiste 36d über die von dem festen Dachabschnitt 16d definierte Dachkontur nach oben hinausragt, ergibt sich die Funktion als Spritzwand für gegebenenfalls über den Lüftungsspalt 28d einspritzendes Wasser. Zum anderen ergibt sich die oben bereits beschriebene geräuschmindernde Wirkung durch eine geeignete Formgebung der Materialleiste 36d. Diese Materialleiste 36d kann beispielsweise wie in den Figuren 2 bis 4 dargestellt strukturiert sein.

Fig. 6 veranschaulicht eine weitere Ausführungsform eines Fahrzeugdaches 10e, bei welchem eine Wasserablaufeinrichtung 30e durch den hinteren Dachöffnungsrand 26e als vertiefter Bereich des festen Dachabschnitts 16e ausgebildet ist. Auf der vorderen Seite dieses Wasserablaufbereichs 30e ist (zusätzlich zu der an der Deckelhinterkante 14e aufgesteckten Dichtung 24e) eine weitere elastische Dichtung 50e als so genannte "Top-Dichtung" angeordnet, welche im Schließzustand mit einem nach oben abstehenden Dichtungsabschnitt 52e die Unterseite des Deckels im hinteren Deckelrandbereich gegenüber dem festen Dachabschnitt 16e abdichtet.

Die als Hohlkammerprofil ausgebildete Dichtung 50e besitzt ferner einen schräg nach vorne und oben abstehenden Dichtungsabschnitt 54e, der mit einer geräuschmindernden Struktur ausgebildet ist (z. B. wie in den Fig. 2 bis 4 dargestellt).

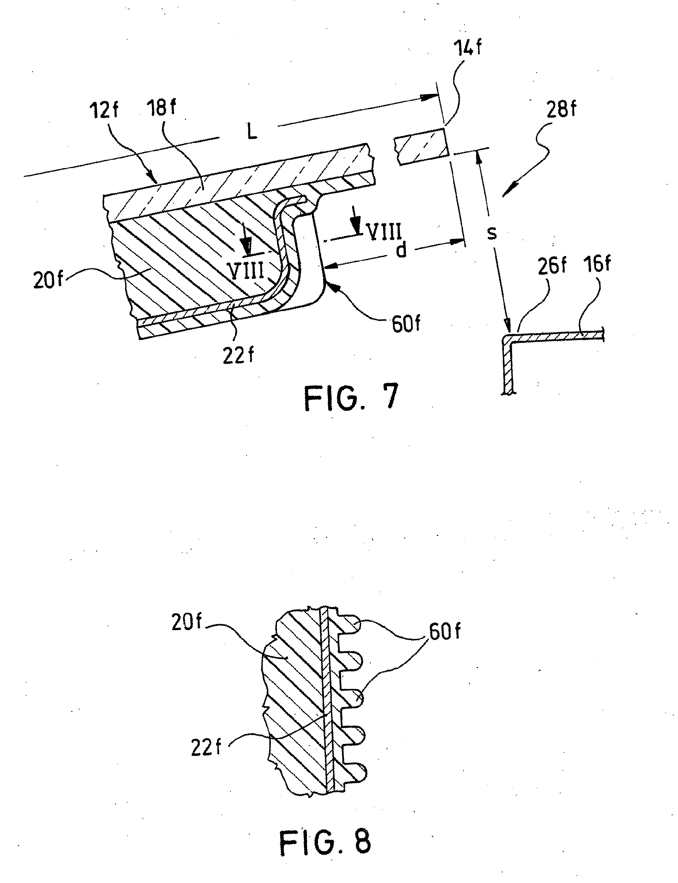

Bei den beschriebenen Ausführungsformen sind die Mittel zur geräuschmindernden Beeinflussung der Luftströmung stets in einem Abstand von der Deckelhinterkante angeordnet, insbesondere in einem in Deckellängsrichtung gemessenen Abstand von dieser Hinterkante, so dass diese Beeinflussungsmittel strömungstechnisch günstiger gelegen sind als die aus dem Stand der Technik bekannten Mittel. Alternativ oder zusätzlich zu der bis hierher durch Beispiele veranschaulichten Anordnung der Beeinflussungsmittel an der Fahrzeugkarosserie (also nicht am bewegbaren Deckel) können Beeinflussungsmittel auch an der Unterseite des Deckels selbst, in einem Abstand von der Deckelhinterkante, angeordnet werden. Nachfolgend wird ein entsprechendes Ausführungsbeispiel mit Bezug auf Fig. 7 erläutert.

Fig. 7 zeigt den hinteren Bereich eines Glasdeckels 12f im ausgestellten Zustand, der im Schließzustand mittels einer "Top-Dichtung" (nicht dargestellt) abgedichtet wird. Bei dem Deckel 12f ist eine Glasplatte 18f an der Unterseite mit einem Verstärkungsabschnitt 20f versehen. Das Material (Umschäumung), aus welchem diese Verstärkung gebildet ist, bildet am hinteren Rand des Verstärkungsabschnitts 20f eine Mehrzahl von vertikal sich erstreckenden Rippen 60f aus, welche diesem in einem Abstand d von der Deckelhinterkante 14f befindlichen Bereich der Deckelunterseite geräuschmindernde Eigenschaften verleihen. Vorteilhaft wird hierbei ohnehin (zur Verstärkung) eingesetztes Material gleichzeitig zur Ausbildung der Geräuschminderungsmittel genutzt.

Es hat sich als vorteilhaft herausgestellt, wenn, wie bei der dargestellten Ausführung vorgesehen, der Abstand d zwischen den Rippen 60f und der Deckelhinterkante 14f mindestens 3% der Deckellängserstreckung L (von Vorderkante bis Hinterkante des Deckels 12f gemessen) beträgt und/oder dieser Abstand d mindestens 50% des Minimalabstands s ("Spaltöffnungsmaß") zwischen Deckelhinterkante 14f und Dachöffnungsrand 26f beträgt.

Abweichend vom dargestellten Ausführungsbeispiel könnten die einzelnen Rippen 60f oder eine diese Rippen aufweisende Materialleiste auch als separate Komponente am hinteren Deckelverstärkungsrand angebracht sein. Ferner können solche Rippen vorteilhaft mit den bei den anderen Ausführungsformen bereits beschriebenen Geräuschminderungsmitteln kombiniert werden, welche fahrzeugseitig, insbesondere an einer Wasserablaufeinrichtung, angeordnet sind.

Wie es in Fig. 8 ersichtlich ist, sind die Rippen 60f äquidistant angeordnet, wobei die Breite jeder Rippe etwa gleich dem gegenseitigen lichten Abstand zwischen benachbarten Rippen ist. Wenn die Rippen aus Kunststoff gebildet sind, so besitzt diese Dimensionierung produktiontstechnische Vorteile, insbesondere wenn eine relativ große Anzahl derartiger Rippen angeordnet werden soll. Bevorzugt sind die Rippen 60f seitlich bis in die Eckbereiche der Deckelunterseite angeordnet. Abweichend vom dargestellten Beispiel ist es alternativ oder zusätzlich auch von Nutzen, wenn die gerippte Oberflächenstruktur an einer nach unten weisenden Fläche des Deckels vorgesehen ist, beispielsweise indem sich die in Fig. 7 ersichtlichen Rippen 60f an der Unterseite des Verstärkungsabschnitts 20f noch etwas in Deckellängsrichtung fortsetzen.

Bei allen beschriebenen Ausführungsformen kommt es zu einer vorteilhaften Reduzierung von Windgeräuschen an der Hinterkante von ausgestellten Deckeln, wobei die hierzu vorgesehenen Mittel sehr effektiv wirken und eine große Gestaltungsfreiheit im Hinblick auf die Konstruktion an der Deckelhinterkante gewährleisten. Ein bevorzugtes Anwendungsgebiet ist die Geräuschreduzierung bei ausstellbaren Glasdeckeln.

### Bezugszeichenliste

- 10: Fahrzeugdach
- 12: Deckel
- 14: Deckelhinterkante
- 16: fester Dachabschnitt
- 18: Glasplatte
- 20: Deckelverstärkungsabschnitt
- 22: Deckelverstärkungsblech
- 24: Deckeldichtung
- 26: hinterer Dachöffnungsrand
- 28: Lüftungsspalt
- 30: Wasserablaufeinrichtung
- 32: Wasserrinne
- 34: Profilschenkel
- 36: Profilleiste
- 40: Dachöffnungsranddichtung
- 42: Kippeinrichtung
- 50: Top-Dichtung
- 52: Dichtungsabschnitt
- 54: Dichtungsabschnitt
- 60: Rippen
- L: Deckellängserstreckung
- s: Spaltöffnungsmaß
- d: Abstand

## Patentansprüche

1. Fahrzeugdach mit einem Deckel (12), der mit seiner Hinterkante (14) aus einer eine Dachöffnung verschließenden Schließstellung nach oben ausstellbar ist, und mit Mitteln zur geräuschmindernden Beeinflussung einer Luftströmung in einem Lüftungsspalt (28), der sich beim Ausstellen des Deckels zwischen der Deckelhinterkante und einem hinteren Dachöffnungsrand (26) ergibt, **dadurch gekennzeichnet, dass** die Mittel zur Beeinflussung der Luftströmung an der Unterseite des Deckels (12) in einem Abstand von der Deckelhinterkante (14) und/oder an einer den hinteren Dachöffnungsrand (26) ausbildenden Wasserablaufeinrichtung (30e) oder an einer zumindest bei ausgestelltem Deckel (12) den hinteren Dachöffnungsrand (26) untergreifenden Wasserablaufeinrichtung (30, 30d) angeordnet sind.

2. Fahrzeugdach nach Anspruch 1, wobei die Mittel zur Beeinflussung der Luftströmung eine bei ausgestelltem Deckel (12) im Bereich des Lüftungsspalts (28) angeordnete, in Fahrzeugquerrichtung sich erstreckende Materialleiste (36) umfassen, die eine Strukturierung derart besitzt, dass der durch die Materialleiste (36) hervorgerufene lokale Strömungswiderstand in Abhängigkeit von einer Position in Fahrzeugquerrichtung variiert.

3. Fahrzeugdach nach Anspruch 2, wobei der durch die Materialleiste (36) hervorgerufene lokale Strömungswiderstand in Fahrzeugquerrichtung betrachtet eine Variation mit mindestens zehn Minima erfährt.

4. Fahrzeugdach nach Anspruch 2 oder 3, wobei die Materialleiste (36) eine Mehrzahl von in Fahrzeugquerrichtung voneinander beabstandet angeordneten Vorsprüngen und/oder Aussparungen aufweist.

5. Fahrzeugdach nach einem der Ansprüche 1 bis 4, wobei an der Unterseite des Deckels (12) in einem Abstand von der Deckelhinterkante (14) angeordnete Mittel zur Beeinflussung der Luftströmung in Deckellängsrichtung betrachtet einen Abstand von der Deckelhinterkante (14) besitzen, der mindestens 3% der Deckellängserstreckung und/oder mindestens 50% des minimalen Abstands zwischen Deckelhinterkante (14) und hinterem Dachöffnungsrand (26) bei ausgestelltem Deckel (12) beträgt.

6. Fahrzeugdach nach einem der Ansprüche 1 bis 5, wobei eine den hinteren Dachöffnungsrand (26) ausbildende Wasserablaufeinrichtung (30e) wenigstens teilweise von einer in Fahrzeugquerrichtung verlaufenden Dichtung (50e) gebildet ist, welche in Schließstellung des Deckels (12) diesen Deckel zum hinteren Dachöffnungsrand (26) hin abdichtet und welche einen in den Lüftungsspalt (28) ragenden Dichtungsabschnitt (54e) als Mittel zur Beeinflussung der Luftströmung aufweist.

7. Fahrzeugdach nach einem der Ansprüche 1 bis 6, wobei eine den hinteren Dachöffnungsrand (26) untergreifende Wasserablaufeinrichtung (30, 30d) von einer in Fahrzeugquerrichtung verlaufenden Wasserrinne (32, 32d) gebildet ist, die an deren Vorderseite (34, 34d) die Mittel zur Beeinflussung der Luftströmung aufweist.

8. Fahrzeugdach nach Anspruch 7, wobei die Wasserrinne (32, 32d) höhenverstellbar vorgesehen ist und bei ausgestelltem Deckel (12) angehoben ist und beim Absenken des Deckels (12) in die Schließstellung zusammen mit dem Deckel abgesenkt wird.
